# EUROPÄISCHE PATENTSCHRIFT

(11) **EP 1 316 485 B1**
(45) Veröffentlichungstag und Bekanntmachung des Hinweises auf die Patenterteilung: **31.10.2007**
(21) Anmeldenummer: 02025307.6
(22) Anmeldetag: 13.11.2002
(51) Int. Cl.: B60R 25/00, B60C 23/04

(54) **Kraftfahrzeug mit einem funkfernbedienbaren Zentralverriegelungssystem**
Vehicle including a remote radio controlled central locking system
Véhicule comprenant un système centralisé de verrouillage commandé à distance

(30) Priorität: 28.11.2001 DE 10158355
(43) Veröffentlichungstag der Anmeldung: 04.06.2003
(73) Patentinhaber: Hella KGaA Hueck & Co., 59552 Lippstadt (DE)
(72) Erfinder: Schrape, Jörg, 59556 Lippstadt (DE); Bödeker, Klaus, 59555 Lippstadt (DE)

(56) Entgegenhaltungen:
- DE-A- 19 720 123
- US-A- 5 661 651

## Beschreibung

Die Erfindung bezieht sich auf ein Kraftfahrzeug mit einem funkfernbedienbaren Zentralverriegelungssystem bestehend aus mindestens einer tragbaren Sendeeinheit (auch Funkschlüssel oder Handsender genannt, welche die zur Zentralverriegelung nötigen Daten über elektromagnetische Wellen an eine im Kraftfahrzeug angeordnete Empfangseinheit sendet, die diese dann an ein Steuergerät weiterleitet, das dann Stellglieder zum Öffnen oder Schließen von Kraftfahrzeugschlössern ansteuert. Darüber hinaus weist das gattungsgemäße Kraftfahrzeug mindestens ein weiteres funkunterstütztes System, z.B. ein Reifenluftdruckkontrollsystem auf, das mindestens eine Sendeeinheit aufweist, die weitere Daten über elektromagnetische Wellen an eine im Kraftfahrzeug angeordnete Empfangseinheit sendet, die diese dann an ein Steuergerät weiterleitet.

Im Fall des Reifenluftdruckkontrollsystems weist jedes Fahrzeugrad einen Reifenluftdrucksensor auf, der den Luftdruck im Reifen misst und über einen Sender, der ebenfalls im Fahrzeugrad angeordnet ist, an eine Empfangseinheit sendet. Ein Reifenluftdrucksensor mit zugehörigem Sender ist zum Beispiel aus der DE 43 03 583 C2 bekannt.

Gegenwärtig benutzen Kraftfahrzeuge, die ein funkfernbedienbares Zentralverriegelungssystem und ein funkfernbedienbares Reifenluftdruckkontrollsystem aufweisen, für beide Systeme dieselbe Funkfrequenz, nämlich die Mittenfrequenz des ISM-Bandes (433,05MHz - 434,79MHz), das in Europa für industrielle, wissenschaftliche und medizinische Anwendungen vorgesehen ist. Bisher werden zwei Empfangseinheiten eingesetzt, da die beiden Systeme bis auf die Verwendung derselben Sendefrequenz ansonsten vollständig unabhängig voneinander sind. Die Reichweiten (Sendeleistungen) der Sendeeinheiten der beiden Systeme sind annähernd gleich.

Allerdings führt die Verwendung derselben Frequenz zu gelegentlichen Kollisionen zwischen den beiden System, die unter bestimmten Bedingungen nicht mehr tolerierbar sind. Diese Kollisionsproblematik wird nachfolgend erläutert.

Die den Reifenluftdrucksensoren zugeordneten Sender senden typischerweise ein- oder zweimal pro Minute ein Datentelegramm von typischerweise ca. 200ms Dauer. Die Sender der Reifenluftdrucksensoren senden auch dann, wenn das Kraftfahrzeug parkt und die Zündung ausgeschaltet ist, da die Reifenluftdrucksensoren und die Sender über Lebensdauerbatterien mit elektrischer Energie versorgt werden. Durch die Verwendung von Zufallsgeneratoren werden die Sendezeitpunkte der einzelnen Sender zufällig gesetzt. Damit wird in der Mehrzahl der Fälle vermieden, daß zwei oder mehr Sender von verschiedenen Reifenluftdrucksensoren eines Kraftfahrzeuges gleichzeitig senden, was zu Störungen führen würde. Dabei sind selbst die wenigen Kollisionsfälle, in denen zwei Sender gleichzeitig senden, für die Sicherheit des Reifenluftdruckkontrollsystems nicht kritisch, da nur ein gewisser Anteil (z.B. 80%) der gesendeten Signale eines Senders eines Reifenluftdrucksensors empfangen werden muß, um eine ausreichende Kontrolle über den Reifendruck in diesem Reifen zu haben.

Die tragbare Sendeeinheit der Zentralverriegelung sendet jeweils bei Betätigung eines Auslösemittels durch den Bediener nach dem Verlassen des Fahrzeuges oder vor dem Einsteigen ein Datentelegramm von typischerweise ebenfalls ca. 200ms Dauer. Bei sogenannten Passive Entry-Systemen sendet die tragbare Sendeeinheit automatisch - ohne eine bewusste Betätigung durch den Bediener - das Datentelegramm, wenn der Bediener mit der tragbaren Sendeeinheit sich dem Kraftfahrzeug bis auf einen bestimmten Abstand genähert hat oder wenn der Bediener z.B. mit seiner Hand in die Griffmulde eines Türschlosses eingreift. Das gattungsgemäße Kraftfahrzeug bezieht die sogenannten Passive-Entry-Zentralverriegelungssysteme mit ein.

Während es die Zuverlässigkeit des Reifenluftdruckkontrollsystems nicht beeinträchtigt, wenn nicht jedes Reifenluftdruck-Datentelegramm empfangen wird, ist es für die Zuverlässigkeit und Bedienerfreundlichkeit eines funkfernbedienbaren Zentralverriegelungssystems notwendig, daß ein gesendetes Datentelegramm immer auch empfangen wird und dann entsprechende Schließ- oder Öffnungsvorgänge auslöst.

In der Vergangenheit waren Störungen von funkfernbedienbaren Zentralverriegelungssystemen durch funkunterstützte Reifenluftdruckkontrollsysteme aufgrund der geringen Häufigkeit der von den Sendern der Reifluftdrucksensoren gesendeten Signale und deren vergleichsweise kurzen Sendedauer äußerst selten. Da zwischen den gesendeten Reifenluftdruck-Datentelegrammen genügend freie und große Zeitfenster für das Zentralverriegelungs-Datentelegramm vorhanden war. Falls es in seltenen Fällen doch zu einer Kollision kam, hat der Bediener die Aussendung des ZV-Datentelegramms ein zweites mal ausgelöst. Die Wahrscheinlichkeit dafür, daß auch das zweite nachfolgende ZV-Datentelegramm aufgrund einer Störung durch die Sender des Reifenluftdruckkontrollsystems nicht empfangen werden kann ist äußerst gering.

Die Problematik der Kollision zwischen funkfernbedienbaren Zentralverriegelungssystemen und funkunterstützten Reifenluftdruckkontrollsystemen wird jedoch in Zukunft stärker zu nehmen, wenn nämlich immer mehr Kraftfahrzeuge beide System aufweisen. Dabei ist nicht so sehr die Eigenkollision, d.h. die Störung des funkfernbedienbaren Zentralverriegelungssystems durch die Sender des eigenen Reifenluftdruckkontrollsystems problematisch, sondern vielmehr die Störung durch die Vielzahl der in der Nachbarschaft eines Kraftfahrzeuges sich befindenden Kraftfahrzeuge. Parkt ein Fahrzeug beispielsweise in der Nachbarschaft von 10 Fahrzeugen, die jeweils ein funkunterstütztes Reifenluftdruckkontrollsystem mit 5 Sendern aufweisen, dann ist die Wahrscheinlichkeit, daß das ZV-Datentelegramm innerhalb eines freien Zeitfensters gesendet wird, schon wesentlich geringer. In diesem Fall senden 55 Reifenluftdruck-Sender (dabei wurden die des betrachteten Fahrzeuges mitgezählt). Wenn diese 55 Reifenluftdruck-Sender jeweils zweimal pro Minute zufällig verteilt senden, sind bereits in einer Minute ca. 20 Sekunden blockiert. Dies hätte zur Folge, daß in einem von drei Fällen die Zentralverriegelung wegen einer Kollision nicht funktioniert.

Noch kritischer wird die Kollisionsproblematik bei funkfernbedienbaren Zentralverriegelungssystemen, die auch noch eine sogenannte Komfortfunktion umfassen. Dabei kann mittels der tragbaren Sendeeinheit das Öffnen/Schließen von Fahrzeugscheiben und/oder eines Schiebedaches aktiviert werden. Zur Aktivierung der Komfortfunktion muß das Auslösemittel an der tragbaren Sendeeinheit während des gesamten Öffnungs /Schließvorgangs betätigt bleiben. Falls der Schließvorgang plötzlich abgebrochen werden muß, da ansonsten die Gefahr des Einklemmens besteht, so geschieht dies durch erneute Betätigung des Auslösemittels oder durch Loslassen des Auslösemittels am tragbaren Sender. Da die Komfortschließungen durchaus 10 bis 20 Sekunden dauern können, kann es aufgrund einer Kollision zu einem ungewollten Abbruch der Komfortfunktion kommen, die nicht tolerierbar ist.

Aus der DE 199 11 459 A1 ist ein Kraftfahrzeug-Steuersystem mit einer funkfernbedienbaren Wegfahrsperreinrichutng und einer funkunterstützten Innenraumüberwachung bekannt, wobei beide Systeme mit derselben Frequenz arbeiten und eine gemeinsame Sende /Empfangseinrichtung benutzen. Eine Kollision ist hier nicht gegeben, da entweder nur die Wegfahrsperreinrichtung oder die Innenraumüberwachung aktiv ist. Dabei wird der Sende /Empfangseinrichtung jeweils über die Betätigung eines Schalters, z.B. in den Fahrzeugtüren, für die Auswertung der Signale mitgeteilt, ob die Wegfahrsperreinrichtung oder die Innenraumüberwachung aktiv ist. Eine Lösung für das vorstehend beschriebene Kollisionsproblem ist der DE 199 11 459 A1 nicht zu entnehmen.

Aus der US 5 661 651 A ist ein Kraftfahrzeug mit den folgenden gattungsgemäßen Merkmalen bekannt:
- einem funkfernbedienbaren Zentralverriegelungssystem bestehend aus mindestens einer tragbaren Sendeeinheit, welche die zur Steuerung der Zentralverriegelung dienenden Daten über elektromagnetische Wellen an eine im Kraftfahrzeug angeordnete Empfangseinheit sendet, die diese dann ein Steuergerät weiterleitet,
- mindestens einem weiteren funkunterstützten System bestehend aus mindestens einer Sendeeinheit, die weitere Daten über elektromagnetische Wellen an eine im Kraftfahrzeug angeordnete Empfangseinheit sendet, die diese dann an ein Steuergerät weiterleitet, wobei
- die mindestens eine tragbare Sendeeinheit des funkfernbedienbaren Zentralverriegelungssystem auf einer ersten Frequenz (f₁)sendet,
- die mindestens eine Sendeeinheit des weiteren funkunterstützten Systems auf einer zweiten Frequenz (f₂) sendet, die von der ersten Frequenz verschieden ist.

Aufgabe der Erfindung ist es daher, ein Fahrzeug mit einem funkfernbedienbaren Zentralverriegelungssystem und einem weiteren funkunterstützten System gemäß US 5 661651 A derart weiterzuentwickeln, dass Kollisionen zwischen den beiden Systemen in kostengünstiger Weise sicher vermieden werden.

Diese Aufgabe wird gelöst, indem für das funkfernbedienbare Zentralverriegelungssystem und das weitere funkunterstützte System nur eine einziger speziell ausgebildeter Superheterodyn-Empfänger als Empfangseinheit verwendet wird, der Mittel zum zeitgleichen Empfang und zur zeitgleichen getrennten Extraktion der auf den beiden Frequenzen (f₁,f₂) gesendeten Daten aufweist.

Ein Superheterodyn-Empfänger, der dem Fachmann wohl vertraut ist, besteht eingangsseitig aus einem Vorfilter, einem Hochfrequenzvorverstärker und einer Mischstufe. In der Mischstufe werden die empfangenen Signale der Frequenz f, die den Vorfilter und den Hochfrequenzvorverstärker durchlaufen haben, mit einem Signal der Frequenz fo eines Oszillators überlagert. Am Ausgang der Mischstufe liegen Signale mit den Zwischenfrequenzen |f - fo| und (f+ fo) an. Darüber hinaus liegen noch Signale mit Zwischenfrequenzen an, die aus einer Überlagerung von empfangenen Störfrequenzen, die den Vorfilter passiert haben, und der Oszillatorfrequenz resultieren. Der Mischstufe nachgeschaltet ist ein Zwischenfrequenzzweig, in dem dann die niederfrequente Zwischenfrequenz |f - fo| über einen schmallbandigen Zwischenfrequenzfilter herausgefiltert und dann verstärkt wird, um dann die Daten durch Demodulation in zuverlässiger Weise extrahieren zu können.

Bei dem erfindungsgemäßen Superheterodyn-Empfänger wird für den Empfang der beiden Signale, die auf unterschiedlichen Frequenzen gesendet werden, nur ein Vorfilter, nur ein Hochfrequenzvorverstärker, nur eine Mischstufe und nur ein Oszillator verwendet. Der Mischstufe nachgeschaltet sind lediglich zwei getrennte Zwischenfrequenzzweige für die Zwischenfrequenzen (f1 - fo) und (fo - f2). Zu diesem Zweck ist die Mittenfrequenz und die Bandbreite des Vorfilters auf die beiden Frequenzen und ihren Abstand zueinander abgestimmt.

Durch die Verwendung von unterschiedlichen Frequenzen, die gleichzeitig empfangen werden können, werden Kollisionen vermieden. Die Verwendung einer einzigen Empfangseinheit für beide Systeme ist kostengünstig, da kostenintensive Empfängerbauteile nur einmal benötigt werden.

Anhand der beigefügten Zeichnungen soll die Erfindung nachfolgend näher erläutert werden.

Es zeigt:
- Figur 1: eine schematische Darstellung eines Fahrzeuges mit beiden Systemen nach dem Stand der Technik,
- Figur 2: einen Superheterodyn-Empfänger nach dem Stand der Technik,
- Figur 3: eine schematische Darstellung eines Fahrzeuges mit beiden Systemen und einer gemeinsamen Empfangseinheit mit Antenne,
- Figur 4: eine schematische Darstellung eines Fahrzeuges mit beiden Systemen und einer gemeinsamen Empfangseinheit mit zwei Antennen,
- Figur 5 -10: den erfindungsgemäßen Superheterodyn-Empfänger
- Figur 11: eine IQ-Mischstufe,

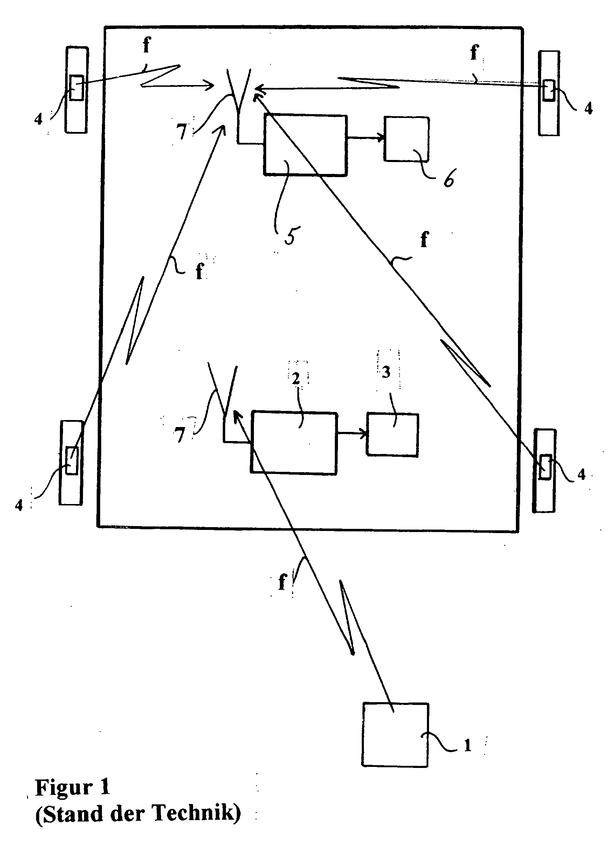

Figur 1 zeigt schematisch ein Fahrzeug, das gemäß dem Stand der Technik über ein funkfernbedienbares Zentralverriegelungssystem und über ein funkunterstütztes Druckluftkontrollsystems verfügt. Das Zentralverriegelungssystem umfasst einen tragbare Sendeeinheit (1) - auch Funkschlüssel oder Handsender genannt - und eine Empfangseinheit (2) mit einer Antenne (7). Der Datenaustausch zwischen dem Funkschlüssel (1) und der Empfangseinheit (2) des Zentralverriegelungssystems erfolgt mit einer Frequenz f. Die Empfangseinheit (2) leitet die vom Funkschlüssel (1) übertragenen Daten an ein Steuergerät (3) weiter, das dann Stellglieder zum Öffnen oder Schließen von Kraftfahrzeugschlössern ansteuert.

Das Reifenluftdruckkontrollsystem umfasst in jedem Fahrzeugrad einen Reifenluftdrucksensor und einen Reifenluftdrucksender (4), der den gemessenen Reifenluftdruck an eine Empfangseinheit (5), welche eine Antenne (7) aufweist, sendet. Die Empfangseinheit (5) leitet die von den Reifenluftdrucksendern (4) übertragenen Daten an ein Steuergerät (6), das den Reifendruck der einzelnen Reifen anzeigt und/oder ggf. bei einer Abweichung des Reifenluftdrucks von einem vorgegebenen Wert einen Alarm auslöst.

Der Datenaustausch zwischen den Reifenluftdrucksendern (4) und der Empfangseinheit (5) des Reifenluftdruckkontrollsystems erfolgt mit derselben Frequenz f, die auch vom Zentralverriegelungssystem verwendet wird. Dabei ist das Signal eines jeden Reifendluftrucksenders (4) kodiert, so daß eine Identifizierung des jeweiligen Reifens möglich ist.

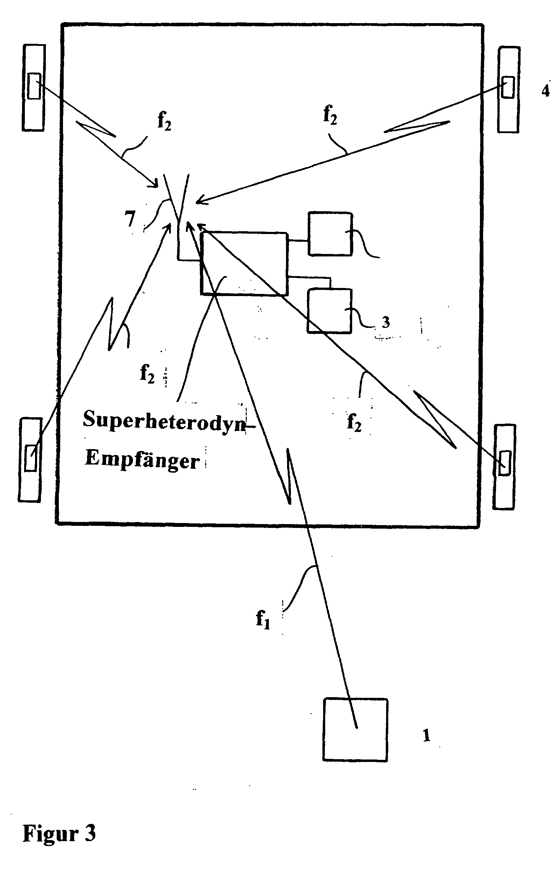

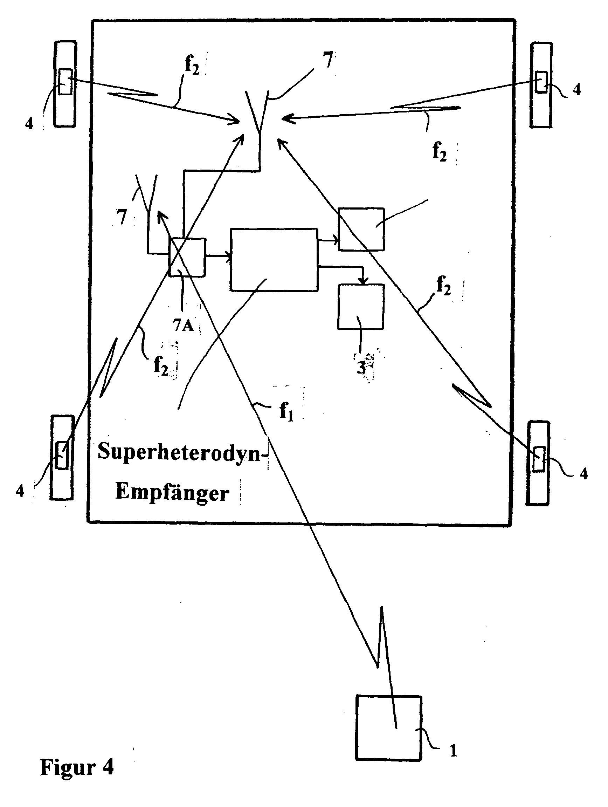

Figur 3 zeigt die erfindungsgemäße Kombination der beiden Systeme, bei der die beiden Systeme auf unterschiedlichen Frequenzen f₁ und f₂ an eine einzige Empfangseinheit senden, die Mittel zum zeitgleichen Empfang und zur zeitgleichen getrennten Extraktion der auf den beiden Frequenzen (f₁, f₂) gesendeten Daten aufweist. Die gesendeten Reifdruck- und Zentralverriegelungsdaten werden dann an das jeweilige Steuergerät (3,6) weitergeleitet. Dabei kann es sich auch um ein einziges Zentralsteuergerät handeln, in dem beide Funktionalitäten integriert sind. Auch die Integration der gemeinsamen Empfangseinheit in ein solches Zentralsteuergerät ist vorgesehen. In der Ausführungsform gemäß Figur 3 ist nur eine einzige Antenne (7) vorgesehen. In der Ausführungsform gemäß Figur 4 sind zwei Antennen (7) vorgesehen, wobei die Empfangssignale über ein Koppelnetzwerk (7A) auf einen Eingang der gemeinsamen Empfangseinheit geführt sind.

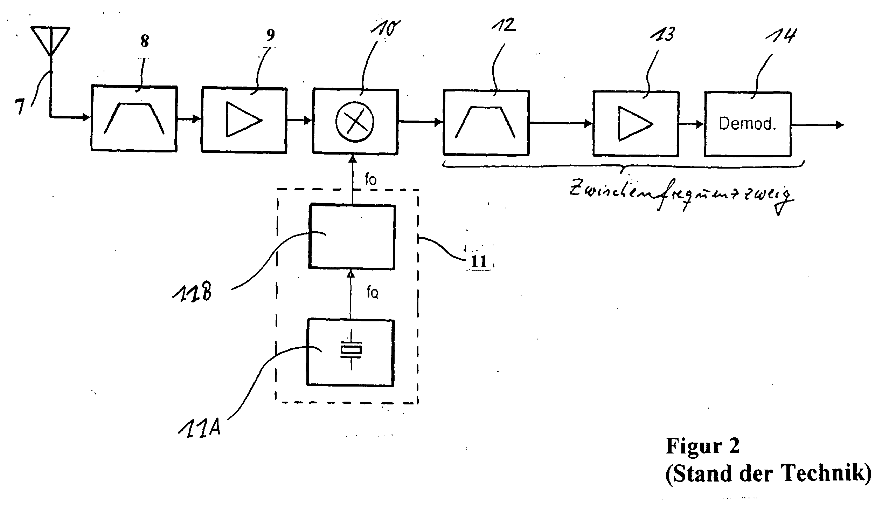

Figur 2 zeigt einen Superheterodyn-Empfänger nach dem Stand der Technik. Er umfasst einen Vorfilter (8), einen Hochfrequenzverstärker (9), eine Mischstufe (10), einen Oszillator (11) und einen Zwischenfrequenzzweig (11). Der Zwischenfrequenzzweig (11) weist nun wiederum einen Zwischenfrequenzfilter (12) einen Zwischenfrequenzverstärker (13) und einen Demodulator (14) auf. Der Oszillator (11) besteht seinerseits aus einem Schwingquarz (11 A), der eine Frequenz f_{Q} liefert und einer sogenannten Phase-Locked- Loop-Schaltung (11B), die aus dem Signal des Schwingquarzes die frequenzstabilisierte Oszillatorfrequenz fo erzeugt.

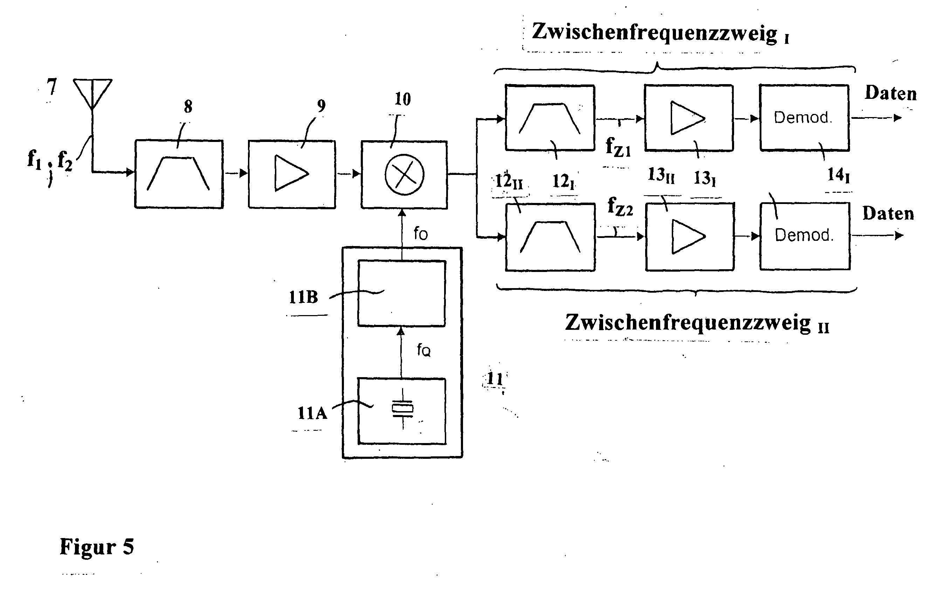

Figur 5 zeigt einen Superheterodyn-Empfänger, der als erfindungsgemäße Empfangseinheit eingesetzt wird. Die von der Antenne (7) empfangenen Signale, die auf den Frequenzen f₁ und f₂ gesendet werden, werden einem gemeinsamen Vorfilter (8) zugeführt. Die Frequenz f₁ des funkfernbedienbaren Zentralverriegelungssystems beträgt zum Beispiel 434,42MHz. Die Frequenz f₂ des funkunterstützten Reifenluftdruckkontrollsystems beträgt zum Beispiel 433,92MHz. Der Frequenzabstand der beiden verwendeten Frequenzen beträgt in dem gewählten Beispiel 500KHz. Die Oszillatorfrequenz beträt 433,42MHz. Die Mittenfrequenz des Vorfilters (8) beträgt 434,17MHz. Die Bandbreite des Vorfilters (8) beträgt ± 300KHz.

Die gefilterten Signale werden verstärkt und dann der Mischstufe (10) zugeführt, die an ihrem Ausgang die Zwischenfrequenzen (f₁ + fₒ), |f₁-f₀|, |f₂-fₒ| und (f₂ + fₒ) erzeugt. Das Ausgangssignal der Mischstufe wird dann zwei getrennten Zwischenfrequenzzweigen zugeführt, deren Zwischenfrequenzfilter (12_{I}, 12_{II}) jeweils mit ihrer Mittenfrequenz auf die Zwischenfrequenz f_{Z1} = (f1 - fo) und f_{Z2} = (fo- f2) abgestimmt sind. Die Bandbreite (± 150KHz) der Zwischenfrequenzfilter ist im Vergleich zu dem Vorfilter (8) relativ schmallbandig. Die schmallbandig herausgefilterten Zwischenfrequenzen werden dann jeweils in einem Zwischenfrequenzverstärker (13_{I}, 13_{II}) verstärkt und einem Demodulator (14_{I}, 14_{II}) zugeführt, an dessen Ausgang dann die Daten zur Verfügung stehen.

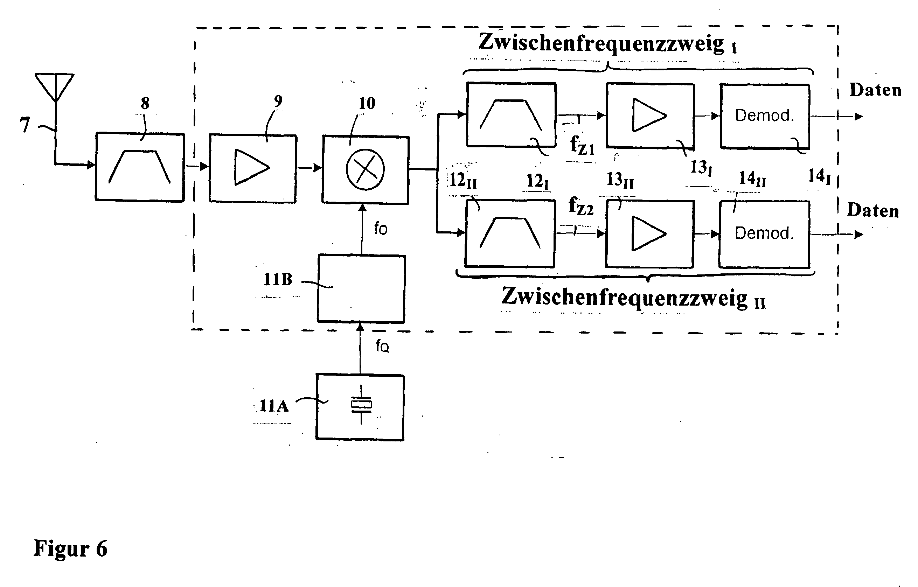

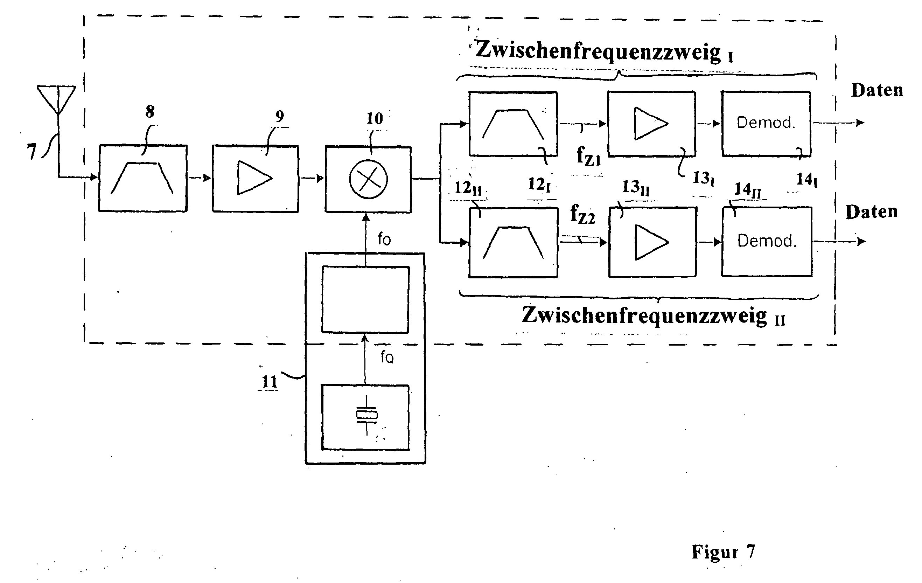

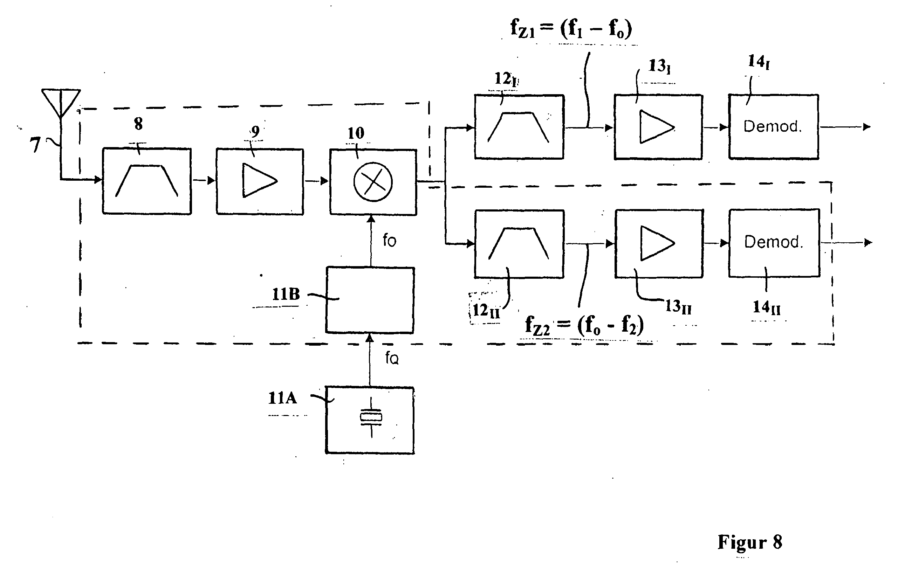

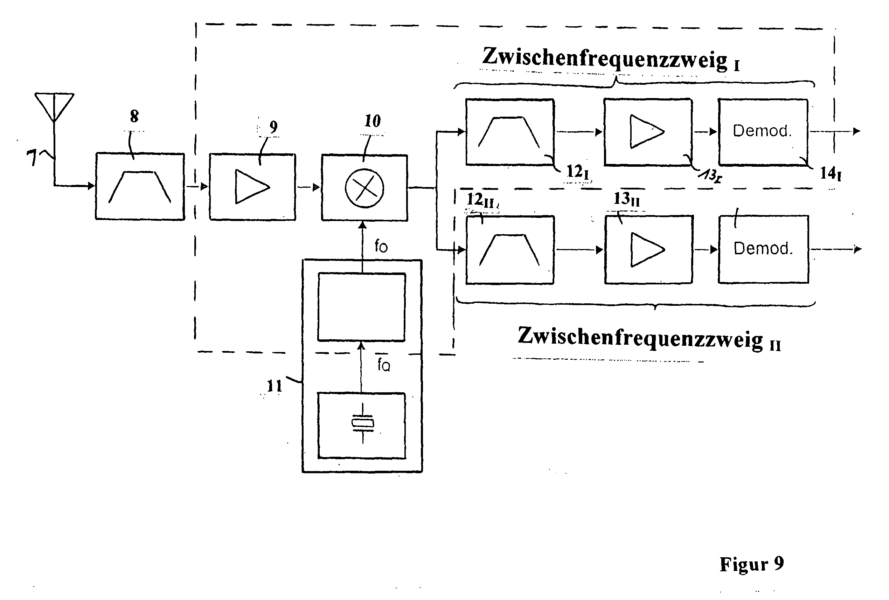

In vorteilhafter Weise sind verschiedene Bauteile des Superheterodyn-Empfängers in einem integrierten Baustein - einem sogenannten ASIC (Application Specific Integrated Circuit) - integriert. In den Figuren 6 bis 9 sind die Bauteile, die in dem ASIC integriert sind, mit einer gestrichelten Line eingefasst. Selbstverständlich kann der Superheterodyn-Empfänger auch vollständig diskret aufgebaut werden.

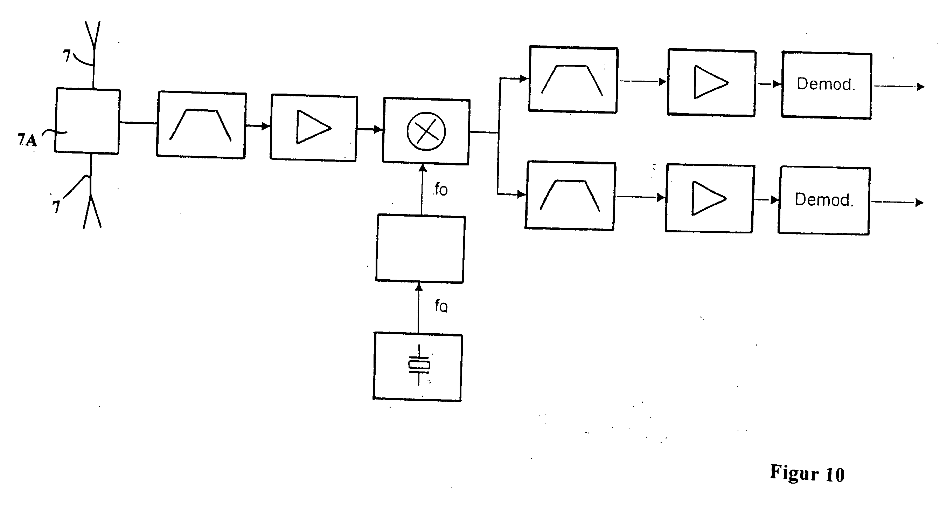

Figur 10 zeigt einen Superheterodyn-Empfänger wie in Figur 5, jedoch mit 2 Antennen (7).

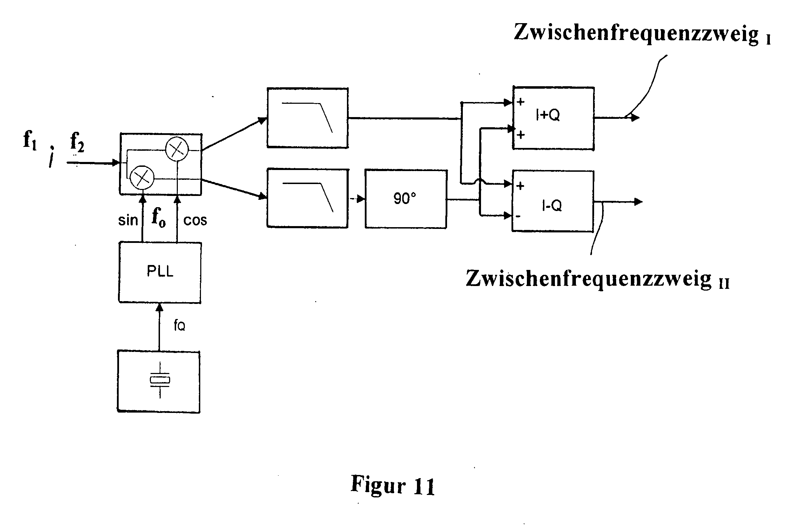

In einer besonders vorteilhaften Ausführungsform ist die Mischstufe des Superheterodyn-Empfänger als sogenannte IQ-Mischstufe ausgebildet (siehe Figur 11). In einer IQ-Mischstufe werden die Signale der beiden Frequenzen f₁ und f₂ jeweils mit dem Signal der Oszillatorfrequenz fo und dem Signal der um 90° phasenverschobenen Oszillatorfrequenz überlagert, wobei zur Ausbildung der ersten und der zweiten Zwischenfrequenz (f₁ - fo) und (fo - f₂) die Überlagerungssignale nach Tiefpassfilterung und Phasenverschiebung addiert und subtrahiert werden, so daß bereits am Ausgang der IQ-Mischstufe die beiden Zwischenfrequenzen getrennt voneinander zur Verfügung stehen. Die Verwendung einer solchen IQ-Mischstufe hat den Vorteil, daß die beiden nachgeschalteten Zwischenfrequenzfilter dieselbe Mittenfrequenz aufweisen können und somit baugleiche Zwischenfrequenzfilter verwendet werden können.

### Bezugszeichenliste :

1) Tragbare Sendeeinheit (Funkschlüssel des Zentralverriegelungssystems)
2) Empfangseinheit des Zentralverriegelungssystems
3) Steuergerät des Zentralverriegelungssystems

4) Raddrucksender
5) Empfangseinheit des Reifenluftdruckkontrollsystems
6) Steuergerät des Reifenluftdruckkontrollsystems

7) Antenne
7A) Koppelnetzwerk

### Superheterodyn-Empfänger

8) Vorfilter
9) Hochfrequenzverstärker
10) Mischstufe
11) Oszillator
11A) Schwingquarz
11B) Phase Locked Loop-Schaltung
12_{I}) Zwischenfrequenzfilter
13_{I}) Niederfrequenzverstärker
14_{I}) Demodulator
12_{II}) Zwischenfrequenzfilter
13_{II}) Niederfrequenzverstärker
14_{II}) Demodulator

## Patentansprüche

1. Kraftfahrzeug mit
- einem funkfernbedienbaren Zentralverriegelungssystem bestehend aus mindestens einer tragbaren Sendeeinheit (1), welche die zur Steuerung der Zentralverriegelung dienenden Daten über elektromagnetische Wellen an eine im Kraftfahrzeug angeordnete Empfangseinheit sendet, die diese dann ein Steuergerät weiterleitet,
- mindestens einem weiteren funkunterstützten System bestehend aus mindestens einer Sendeeinheit (4), die weitere Daten über elektromagnetische Wellen an eine im Kraftfahrzeug angeordnete Empfangseinheit sendet, die diese dann an ein Steuergerät weiterleitet,
wobei die mindestens eine tragbare Sendeeinheit (1) des funkfernbedienbaren Zentralverriegelungssystem auf einer ersten Frequenz (f₁) sendet,
wobei die mindestens eine Sendeeinheit (4) des weiteren funkunterstützten Systems auf einer zweiten Frequenz (f₂) sendet, die von der ersten Frequenz verschieden ist,
**dadurch gekennzeichnet, daß**
- für das funkfernbedienbare Zentralverriegelungssystem und das weitere funkunterstützte System nur eine einzige Empfangseinheit verwendet wird, die Mittel zum zeitgleichen Empfang und zur zeitgleichen getrennten Extraktion der auf den beiden Frequenzen (f₁, f₂ gesendeten Daten aufweist,
- die Empfangseinheit einen Superheterodyn-Empfänger aufweist, wobei für die beiden Sendefrequenzen nur ein Vorfilter (8), nur ein Hochfrequenzvorverstärker (9), nur eine Mischstufe (10) und nur ein Oszillator (11) verwendet wird, wobei der Mischstufe (10) lediglich zwei getrennte Zwischenfrequenzzweige für die Zwischenfrequenzen f_{Z1} = (f1 - fo) und f_{Z2} = (fo - f2) nachgeschaltet sind, in denen die getrennte Extraktion der auf den beiden Frequenzen gesendeten Daten erfolgt.

2. Kraftfahrzeug nach Anspruch 1,
**dadurch gekennzeichnet, daß**
das weitere funkunterstützte System ein Reifenluftdruckkontrollsystem ist, das mindestens einen Reifenluftdrucksensor aufweist, der an einem Fahrzeugrad angeordnet ist und den gemessenen Reifenluftdruck über einen zugeordneten Sender (4) am Fahrzeugrad an die Empfangseinheit sendet.

3. Kraftfahrzeug nach Anspruch 1 oder 2,
**dadurch gekennzeichnet, daß**
die beiden Zwischenfrequenzzweige jeweils einen Zwischenfrequenzfilter (12_{I}, 12_{II}) einen Zwischenfrequenzverstärker (13_{I}, 13_{II}) und einen Demodulator (14_{I}, 14_{II})aufweisen.

4. Kraftfahrzeug nach Anspruch 3,
**dadurch gekennzeichnet, daß**
die beiden Zwischenfrequenzfilter (12_{I}, 12_{II}) jeweils unterschiedliche Mittenfrequenzen aufweisen.

5. Kraftfahrzeug nach einem der Ansprüche 1 bis 3,
**dadurch gekennzeichnet, daß**
- die Mischstufe eine IQ-Mischstufe ist, in der die Signale der beiden Frequenzen f₁ und f₂ jeweils mit dem Signal der Oszillatorfrequenz fo und dem Signal der um 90° phasenverschobenen Oszillatorfrequenz überlagert werden, wobei zur Ausbildung der ersten und der zweiten Zwischenfrequenz (f₁ - fo) und (fo - f₂) die Überlagerungssignale addiert und subtrahiert werden, so daß am Ausgang der IQ-Mischstufe die beiden Zwischenfrequenzen f_{Z1} = (f1 - fo) und f_{Z2} = (fo - f2) getrennt voneinander zur Verfügung stehen,
- die beiden nachgeschalteten Zwischenfrequenzfilter dieselbe Mittenfrequenz aufweisen.

6. Kraftfahrzeug nach Anspruch einem der vorstehenden Ansprüche,
**dadurch gekennzeichnet, daß**
die Empfangseinheit an eine einzige Antenne (7) angeschlossen ist.

7. Kraftfahrzeug nach Anspruch einem der Ansprüche 1 bis 5,
**dadurch gekennzeichnet, daß**
die Empfangseinheit zwei oder mehr Antennen (7) umfasst, wobei die Empfangssignale über ein Koppelnetzwerk (7A) auf einen Eingang des Vorfilters (8) geführt sind.

## Claims

1. Motor vehicle featuring
- a remote-controllable central locking system consisting of at least one portable transmitter unit (1) which emits electromagnetic waves carrying the data needed to control the central locking system which data is first picked up by a receiver unit located inside the motor vehicle and then routed to an electronic control unit,
- at least one other radio-supported system consisting of at least one transmitter unit (4) which emits electromagnetic waves carrying other data to a receiver unit located inside the motor vehicle which data is routed by the receiver unit to an electronic control unit, where the at least one portable transmitter unit (1) of the remote-controllable central locking system transmits its data at a first frequency (f1), and where the at least one transmitter unit (4) of the other radio-supported system transmits its data at a second frequency (f2) that is different from the first frequency
wherein
- the remote-controllable central locking system and the other radio-supported system are both served by a single receiver unit which has means of simultaneously receiving the data transmitted at the two frequencies (f1, f2) and of simultaneously and separately extracting the two sets of data,
- the receiver unit has a superheterodyne receiver where a single prefilter (8), a single radio-frequency preamplifier (9), a single mixer stage (10), and a single oscillator (11) is used for both transmitter frequencies, where the load side of the mixer stage (10) is simply connected to two separate intermediate frequency branches for the intermediate frequencies fz1=(f1-f0) and fz2=(f0-f2) along which separate extraction of the data carried by the two frequencies is performed.

2. Motor vehicle as in claim 1, wherein the other radio-supported system is a tire pressure gauging system featuring at least one tire pressure sensor installed near a wheel of the vehicle which uses the allocated transmitter (4) installed at the wheel of the vehicle to transmit the measured tire pressure to the receiver unit.

3. Motor vehicle as in claim 1 or 2, wherein an intermediate frequency filter (12_{I}, 12_{II}), an intermediate frequency amplifier (13_{I}, 13_{II}), and a demodulator (14_{I}, 14_{II}) is allocated to each of the two intermediate frequency branches.

4. Motor vehicle as in claim 3, wherein the two intermediate frequency filters (12_{I}, 12_{II}) have different center frequencies.

5. Motor vehicle as in one of claims 1 to 3, wherein
- the mixer stage is an IQ mixer stage in which an interference occurs between the signals of each of the two frequencies f1 and f2 and the oscillator frequency signal f0 and the signal of the 90° angular oscillator frequency, where the heterodyne signals are added and subtracted to generate the first and second intermediate frequency (f1 - f0) and (f0 - f2) such that the two intermediate frequencies f_{Z1} = (f1 - f0) and f_{Z2} = (f0 - f2) are separately output by the IQ mixer stage,
- the two intermediate frequency filters connected to the load side have the same center frequency.

6. Motor vehicle as in one of the above claims, wherein the receiver unit is connected to a single aerial (7).

7. Motor vehicle as in one of claims 1 to 5, wherein the receiver unit has two or more aerials (7) and where a coupling network (7A) directs the signals received to an input of the prefilter (8).

## Revendications

1. Véhicule à moteur avec
- un système de verrouillage centralisé télécommandable par radio, composé d'au moins un module émetteur portable (1) qui envoie les données servant à commander le verrouillage centralisé par le biais d'ondes magnétiques à un module récepteur, disposé dans le véhicule, qui retransmet ensuite ces données à un appareil de commande,
- au moins un autre système fonctionnant par radio, composé d'au moins un module émetteur (4) qui envoie d'autres données par le biais d'ondes électromagnétiques à un module récepteur, disposé dans le véhicule, qui retransmet ensuite ces données à un appareil de commande,
ledit au moins un module émetteur portable (1) du système de verrouillage centralisé télécommandable par radio émettant à une première fréquence (f₁),
ledit au moins un module émetteur (4) de l'autre système fonctionnant par radio émettant à une deuxième fréquence (f₂) qui est différente de la première fréquence,
**caractérisé en ce que**
- un seul module récepteur présentant des moyens de réception isochrone et d'extraction isochrone séparée des données envoyées sur les deux fréquences (f₁, f₂) est utilisé pour le système de verrouillage centralisé télécommandable par radio et l'autre système fonctionnant par radio,
- le module récepteur présente un récepteur superhétérodyne, un seul préfiltre (8), un seul préamplificateur haute fréquence (9), un seule étage mélangeur (10) et un seul oscillateur (11) étant utilisé pour les deux fréquences d'émission, l'étage mélangeur (10) étant suivi uniquement de deux branches à fréquence intermédiaire séparées pour les fréquences intermédiaires f_{Z1} = (f₁ - f₀) et f_{Z2} = (f₀ - f₂), dans lesquelles s'effectue l'extraction séparée des données envoyées sur les deux fréquences.

2. Véhicule à moteur selon la revendication 1, **caractérisé en ce que** l'autre système fonctionnant par radio est un système de contrôle de la pression de gonflement des pneus qui est disposé sur une roue de véhicule et qui envoie la pression de gonflement des pneus au module de réception par le biais d'un émetteur (4) associé monté sur la roue du véhicule.

3. Véhicule à moteur selon la revendication 1 ou la revendication 2, **caractérisé en ce que** les branches à fréquence intermédiaire d'un filtre de fréquence intermédiaire (12_{I}, 12_{II}) présentent chacune un amplificateur de fréquence intermédiaire (13_{I}, 13_{II}) et un démodulateur (14_{I}, 14_{II}).

4. Véhicule à moteur selon la revendication 3, **caractérisé en ce que** les deux filtres de fréquence intermédiaire (12_{I}, 12_{II}) présentent chacun des fréquences centrales différentes.

5. Véhicule à moteur selon l'une des revendications 1 à 3, **caractérisé en ce que**
- l'étage mélangeur est un étage mélangeur I/Q dans lequel les signaux des deux fréquences f₁ et f₂ sont superposés au signal de fréquence f₀ de l'oscillateur et au signal de fréquence de l'oscillateur déphasé de 90°, les signaux de superposition, pour former la première et la deuxième fréquence intermédiaire (f₁ - f₀) et (f₀ - f₂), étant additionnés et soustraits de façon que les deux fréquences intermédiaires f_{Z1}= (f₁ - f₀) et f_{Z2} = (f₀ - f₂) soient disponibles à la sortie de l'étage mélangeur I/Q,
- les deux filtres de fréquence intermédiaire en aval présentent la même fréquence centrale.

6. Véhicule à moteur selon l'une des revendications précédentes, **caractérisé en ce que** le module récepteur est relié à une antenne (7) unique.

7. Véhicule à moteur selon l'une des revendications 1 à 5, **caractérisé en ce que** le module récepteur comprend deux ou plusieurs antennes (7), les signaux de réception étant appliqués par le biais d'un réseau de couplage (7A) à une entrée du préfiltre (8).
